# EUROPÄISCHE PATENTSCHRIFT

(11) **EP 2 827 743 B1**
(45) Veröffentlichungstag und Bekanntmachung des Hinweises auf die Patenterteilung: **06.04.2016**
(21) Anmeldenummer: 13709291.2
(22) Anmeldetag: 15.02.2013
(51) Int. Cl.: A47B 88/08

(54) **ZAHNTRAGENDER KÖRPER**
TOOTH-BEARING BODY
CORPS PORTEUR DE DENTS

(30) Priorität: 23.03.2012 AT 3602012
(43) Veröffentlichungstag der Anmeldung: 28.01.2015
(73) Patentinhaber: FULTERER Gesellschaft mbH, 6890 Lustenau (AT)
(72) Erfinder: BONAT, Günter, A-6911 Lochau (AT)
(74) Vertreter: Fechner, Thomas
(86) Internationale Anmeldenummer: PCT/AT2013/000028
(87) Internationale Veröffentlichungsnummer: WO 2013/138827

(56) Entgegenhaltungen:
- WO-A1-2007/007950

## Beschreibung

Die vorliegende Erfindung betrifft eine Anordnung gemäß Oberbegriff des Patentanspruchs 1.

Beim Stand der Technik sind sogenannte Doppelverzahnungen in Form von zahntragenden Körpern mit zwei Abfolgen von Zähnen bekannt. Sie werden z.B. bei Möbelbeschlägen und insbesondere bei Auszugseinrichtungen für bewegliche Möbelteile dazu eingesetzt, den Lauf verschiedener Schienenanordnungen miteinander zu synchronisieren oder eine mittels eines Sperrmechanismus auf die eine Schienenanordnung einer solchen Auszugseinrichtung aufgebrachte Sperrfunktion auch auf die Schienenanordnung auf der anderen Seite des beweglichen Möbelteils zu übertragen. Die Zähne der ersten Abfolge sind in der Regel in Rollrichtung versetzt zu den Zähnen der zweiten Abfolge angeordnet, wodurch immer eine der Abfolgen voll im Eingriff ist.

Eine Anordnung gemäß dem Oberbegriff ist aus der WO 2007/007950 A1 bekannt.

Aufgabe der Erfindung ist es, eine alternative Art der Ausgestaltungsform einer oben genannten Anordnung bereitzustellen, welche einen hohen Grad an Laufruhe und Sperrsicherheit zur Verfügung stellt.

Erfindungsgemäß wird dies durch eine Anordnung gemäß Patentanspruch 1 erreicht.

Ein Grundgedanke der Erfindung ist es somit, dass die größeren Zähne der ersten Abfolge so groß sind, dass sie in eine entsprechende erste Abfolge eines anderen bzw. weiteren zahntragenden Körpers permanent eingreifen, während die Zähne der zweiten Abfolge durch ihre kleinere Ausbildung im Normalbetrieb, in dem nur die bei der normalen Bedienung üblicherweise auftretenden Kräfte wirken, leer mitlaufen, ohne Kontakt zu Zähnen einer zweiten Abfolge des weiteren zahntragenden Körpers zu haben. Diese Zähne der zweiten Abfolge des erfindungsgemäßen zahntragenden Körpers kommen nur dann zum Einsatz in Kontakt mit der genannten Gegenverzahnung, wenn bei Fehlbedienungen solche Kräfte auftreten, dass die Sperrfunktion der Zähne der zweiten Abfolge benötigt wird. Durch diese Maßnahme wird auch der Geräuschpegel im Normalbetrieb herabgesetzt, da die Zähne der zweiten Abfolge ja praktisch leer mitlaufen und damit kein Geräusch verursachen.

Der Betriebszustand, bei dem die Zähne der zweiten Abfolge des zahntragenden Körpers vollständig berührungsfrei zwischen den Zähnen der zweiten Abfolge des weiteren zahntragenden Körpers angeordnet sind, beschreibt den Zustand, vorzugsweise im normalen Lastfall, in dem eben kein Kontakt zwischen den zweiten Abfolgen von Zähnen besteht. Im Missbrauchs- bzw. Überlastfall hingegen können die Zähne der zweiten Abfolgen des erfindungsgemäßen zahntragenden Körpers und des weiteren zahntragenden Körpers in Kontakt miteinander geraten, um die benötigte Sperrfunktion sicherzustellen.

Im Sinne einer möglichst geringen Geräuschentwicklung sehen bevorzugte Ausgestaltungsformen der Erfindung vor, dass die Zähne der ersten Abfolge jeweils einen Zahnkern und zumindest einen, diesen Zahnkern ummantelnden und eine äußere Oberfläche des jeweiligen Zahns ausbildenden Zahnmantel aufweisen, wobei der Zahnmantel weicher ausgebildet ist als der Zahnkern. Im Normalbetrieb können dann nur die Zähne der ersten Abfolge mit ihrem weichen Zahnmantel in Kontakt mit den Zähnen der ersten Abfolge des weiteren zahntragenden Körpers sein. In diesem Zusammenhang ist es dann im Sinne der genannten Sperrfunktion günstig, wenn die Zähne der zweiten Abfolge härter ausgebildet sind als die Zahnmäntel der Zähne der ersten Abfolge.

Der Vollständigkeit halber wird darauf hingewiesen, dass die Rollrichtung die Richtung ist, in der der erfindungsgemäße zahntragende Körper im Normalbetrieb auf einem dazu vorgesehenen weiteren zahntragenden Körper abrollt bzw. umgekehrt. Weiters wird darauf hingewiesen, dass die erste Abfolge von Zähnen und die zweite Abfolge von Zähnen in der Querrichtung, also orthogonal zur Rollrichtung nebeneinander angeordnet sind. Vorzugsweise sind sie ausschließlich nebeneinander angeordnet, was bedeutet, dass sich die Abfolgen nicht überlappen und nicht ineinander greifend angeordnet sind.

Eine erste Art von zahntragenden Körpern sieht vor, dass der zahntragende Körper ein Zahnrad und die Rollrichtung die Umfangsrichtung des Zahnrades ist, in der das Zahnrad über seine Zähne abrollt. Genauso gut ist es aber auch möglich, dass der zahntragende Körper eine Zahnstange ist und die Rollrichtung die Richtung ist, in der ein Zahnrad als weiterer zahntragender Körper auf der Zahnstange abrollt.

Bevorzugte Ausgestaltungsformen sehen vor, dass in Rollrichtung gesehen, die Zähne der ersten Abfolge äquidistant zueinander angeordnet sind. Es ist auch günstig, wenn in Rollrichtung gesehen, die Zähne der zweiten Abfolge äquidistant zueinander angeordnet sind. Unter der äquidistanten Anordnung ist dabei zu verstehen, dass innerhalb der Abfolge jeder Zahn den gleichen-Abstand zum Vorder- und Hinterzahn hat wie die anderen Zähne. Die Zähne der ersten Abfolge und die Zähne der zweiten Abfolge können in Rollrichtung gesehen, versetzt zueinander angeordnet sein. Z.B. ist es in diesem Zusammenhang möglich, dass die Zähne der zweiten Abfolge in Rollrichtung gesehen, dort angeordnet sind, wo daneben zwischen zwei Zähnen der ersten Abfolge eine entsprechende Ausnehmung angeordnet ist. Besonders bevorzugte Ausgestaltungsformen der Erfindung sehen vor, dass, in Rollrichtung gesehen, die jeweils aufeinander folgenden Zähne der ersten Abfolge den gleichen Abstand zueinander haben wie, in Rollrichtung gesehen, die jeweils aufeinander folgenden Zähne der zweiten Abfolge zueinander haben. Die beiden Abfolgen können nebeneinander unmittelbar aneinander angrenzend auf den erfindungsgemäßen zahntragenden Körper angeordnet sein. Bevorzugte Ausgestaltungsformen sehen jedoch vor, dass, in Querrichtung gesehen, zwischen der ersten Abfolge von Zähnen und der zweiten Abfolge von Zähnen zumindest ein, die Abfolgen voneinander trennender Zwischensteg oder zumindest eine, die Abfolgen voneinander trennende Zwischennut angeordnet ist.

Neben der Anordnung an sich bezieht sich die Erfindung auch noch auf eine Auszugseinrichtung für ein bewegliches Möbelteil, insbesondere eine Schubladenauszugseinrichtung, mit zumindest einer erfindungsgemäßen oben genannten Anordnung.

Die erfindungsgemäßen Anordnungen können in solchen Auszugseinrichtungen zur Synchronisation der Auszugsbewegung zumindest zweier voneinander distanziert angeordneter Schienenanordnungen vorgesehen sein. Zwei zahntragende Körper können z.B. mittels einer Welle starr miteinander verbunden sein. Es kann auch vorgesehen sein, dass unter Verwendung von zahntragenden Körpern eine Sperrfunktion von einer, auf einer Seite des beweglichen Möbelteils angeordneten Schienenanordnung auf eine Schienenanordnung, welche auf der gegenüberliegenden Seite des beweglichen Möbelteils angeordnet ist, übertragen wird.

Weitere Merkmale und Einzelheiten bevorzugter Ausgestaltungsformen der Erfindung werden beispielhaft anhand der nachfolgenden Figurenbeschreibung erläutert. Es zeigen:
Fig. 1 eine Auszugseinrichtung für ein bewegliches Möbelteil, bei dem erfindungsgemäße zahntragende Körper eingesetzt werden;
Fig. 2 und 3 die Möglichkeit, die Auszugseinrichtung gemäß Fig. 1 mit einem Verriegelungssystem zu kombinieren;
Fig. 4 die Zahnstangen und die mittels Welle verbundenen erfindungsgemäßen Zahnräder des Ausführungsbeispiels gemäß Fig. 1;
Fig. 5 bis 8 Darstellungen zu einem erfindungsgemäß ausgebildeten Zahnrad;
Fig. 9 und 10 die Schnitte CC und DD aus Fig. 4;
Fig. 11 bis 13 Darstellungen zu einem erfindungsgemäßen Ausführungsbeispiel einer Zahnstange.

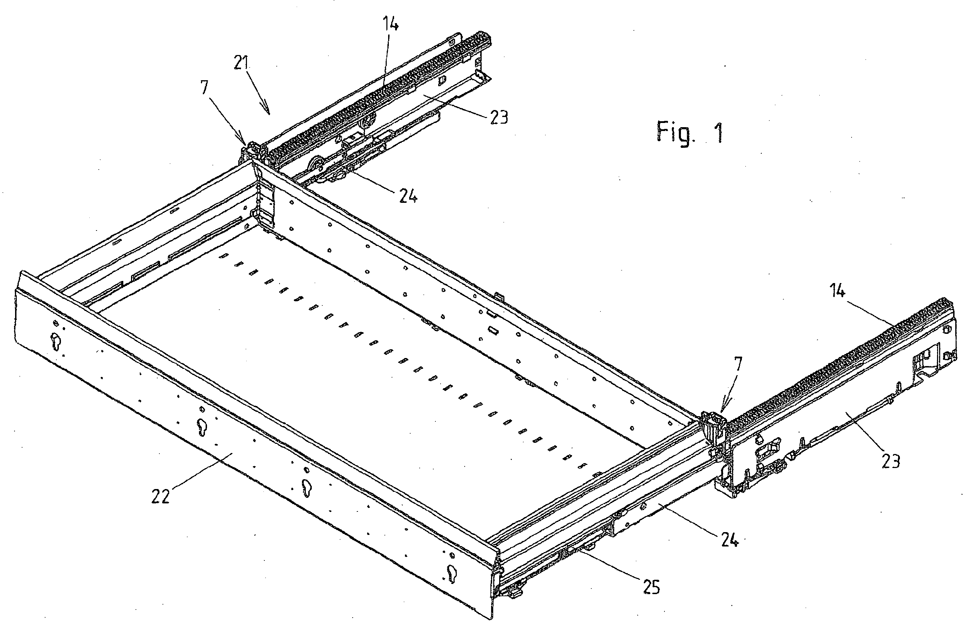

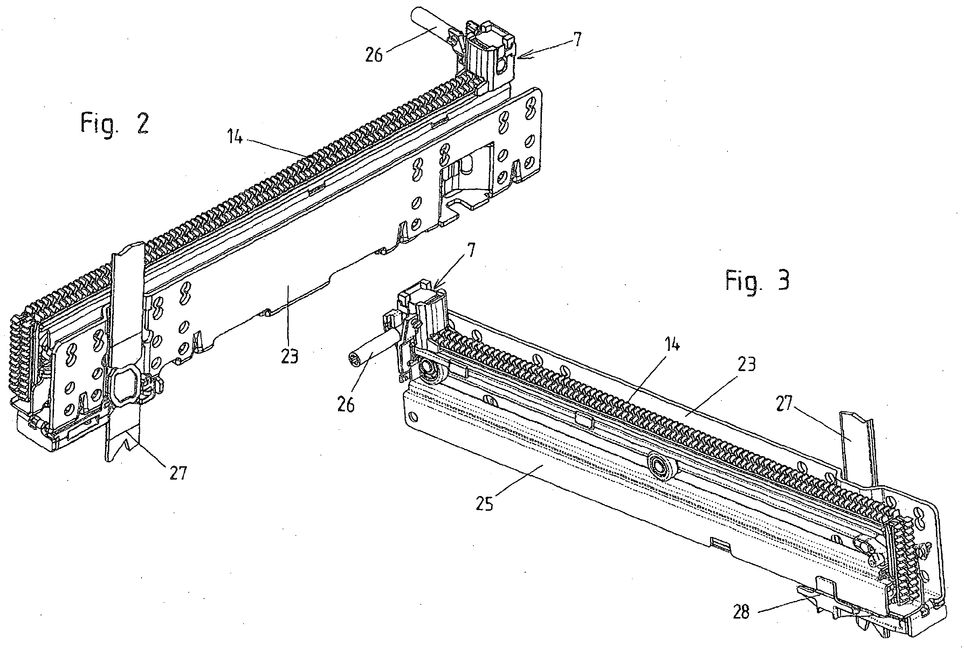

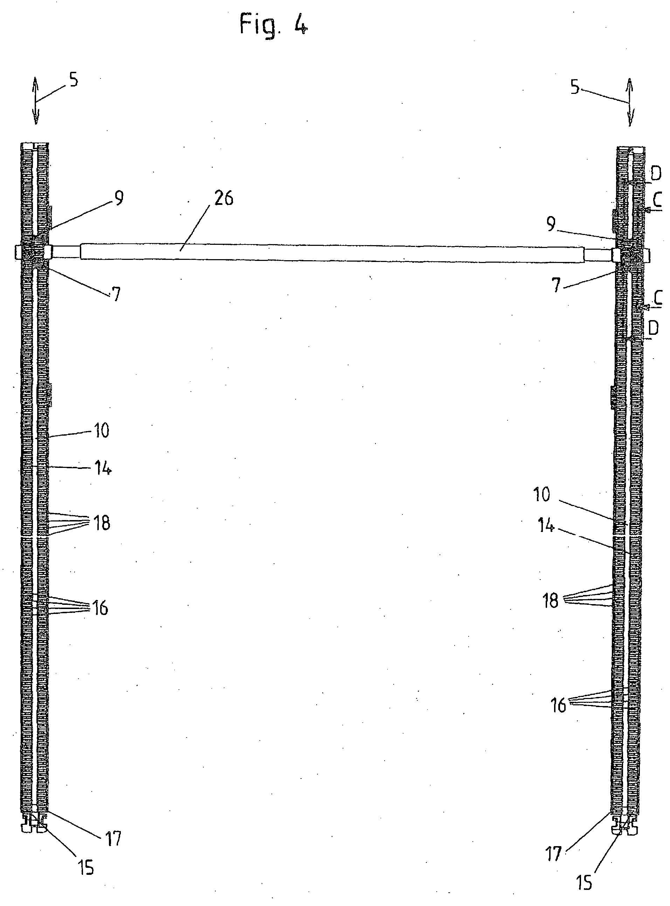

Fig. 1 zeigt eine Auszugseinrichtung 21 für ein bewegliches Möbelteil 22 in Form einer Schublade. Es handelt sich beim gezeigten Ausführungsbeispiel somit um eine Schubladenauszugseinrichtung. Diese weist neben der Schublade in Form des beweglichen Möbelteils 22 auch auf beiden Seiten der Schublade 22 angeordnete Schienenanordnungen auf, mit denen das bewegliche Möbelteil 22 bzw. die Schublade ein- und ausgefahren werden kann. Jedes der Schienensysteme weist eine Korpusschiene 23 auf, welche in der Regel am Möbelkorpus befestigt wird. Am beweglichen Möbelteil 22 bzw. der Schublade selbst befindet sich die sogenannte Ladenschiene 25. Korpusschiene 23 und Ladenschiene 25 sind, wie an sich bekannt, über eine Mittelschiene 24 miteinander verbunden. Im gezeigten Ausführungsbeispiel handelt es sich um einen sogenannten Vollauszug. Natürlich kann die Erfindung auch für Einfachauszüge ohne Mittelschiene 24 realisiert werden. Zur Synchronisierung der Ein- und Auszugsbewegungen der beiden genannten Schienensysteme befindet sich auf jeder Korpusschiene 23 ein dort fixierter weiterer zahntragender Körper 14. In Fig. 1 sind diese weiteren zahntragenden Körper 14 jeweils als Zahnstange mit jeweils zwei Abfolgen 15 und 17 von Zähnen 16 und 18 ausgebildet. In jede dieser Zahnstangen 14 greift ein erfindungsgemäßer zahntragender Körper 7 in Form der in Fig. 1 verdeckten und damit nicht unmittelbar sichtbaren, aber in den anderen Figuren gezeigten Zahnräder 7 ein. Diese Zahnräder 7 sind, wie besonders gut in Fig. 4 zu sehen, drehfest mittels der Verbindungswelle 26 miteinander verbunden, was zu einer Synchronisation des Ablaufs der Zahnräder 7 auf den Zahnstangen 14 in den Rollrichtungen 5 führt. Durch die Verbindungswelle 26 kann jedes der Zahnräder 7 nur dann auf der ihm zugeordneten Zahnstange 14 abrollen, wenn dies auch das andere Zahnrad 7 auf der anderen Zahnstange 14 tut. Die Fig. 2 und 3 zeigen Ansichten auf jeweils eine Schienenanordnung gemäß der Fig. 1, wobei zusätzlich ein Verriegelungssystem mit der Sperrstange 27 um dem Verriegelungskörper 28 vorgesehen ist. Mittels der Sperrstange 27 kann, wie an sich bekannt, der Verriegelungskörper 28 betätigt werden. Er kann mittels der Sperrstange 27 zwischen einer Eingriffsposition und einer Freigabeposition verstellt werden. Befindet sich der Verriegelungskörper 28 in der Eingriffsposition, so kann die Ladenschiene 25 und damit das gesamte bewegliche Möbelteil 22 nicht aus der Korpusschiene 23 ausgefahren werden. Diese Sperrwirkung kann von der in den Fig. 2 und 3 dargestellten Schienenanordnung über die hier eingesetzten, erfindungsgemäßen Zahnräder 7 und die sie miteinander starr verbindende Verbindungswelle 26 auf die Schienenanordnung auf der anderen Seite des beweglichen Möbelteils 22 übertragen werden, sodass das bewegliche Möbelteil 22 nicht einseitig ein Stück weit ausgefahren und dann verklemmt werden kann. Geeignete Verriegelungssysteme sind beim Stand der Technik bekannt und müssen hier nicht weiter erläutert werden.

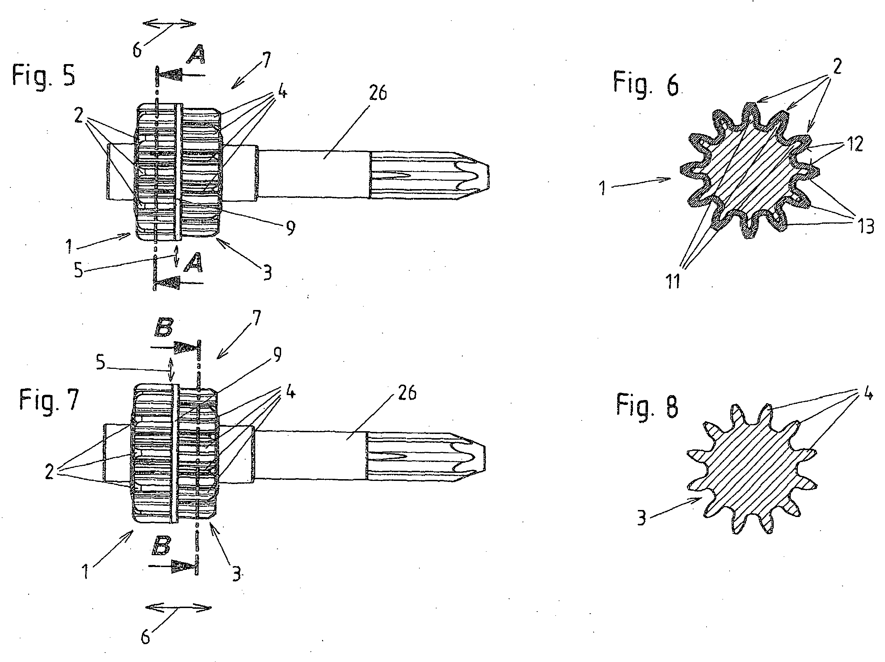

Fig. 4 zeigt nun losgelöst von anderen Bauteilen der Auszugseinrichtung die beiden als Zahnräder ausgebildeten erfindungsgemäßen zahntragenden Körper 7, wie sie mittels der Verbindungswelle 26 starr miteinander verbunden sind und auf einem jeweils als Zahnstange ausgeführten weiteren zahntragenden Körper 14 in den Rollrichtungen 5 abrollen können. Die weiteren zahntragenden Körper 14 weisen jeweils eine erste Abfolge von Zähnen 16 und eine zweite Abfolge von Zähnen 18 auf. Die Zähne 16 und 18 dieser beiden Abfolgen 15 und 17 sind jeweils gleich groß und äquidistant zueinander angeordnet. Zwischen den beiden Abfolgen 15 und 17 der Zähne 16 und 18 des weiteren zahntragenden Körpers 14 befindet sich die Zwischennut 10, in die jeweils der Zwischensteg 9 der Zahnräder 7 eingreifen kann. In den Fig. 5 und 7 sind nun die erfindungsgemäßen zahntragenden Körper dieses Ausführungsbeispiels in Form der Zahnräder 7 vergrößert dargestellt. Die Verbindungswelle 26 bildet in dieser Ausführungsform gleichzeitig die Achswelle, um die die Zahnräder 7 in Rollrichtungen 5 drehen können. Gut zu sehen ist jeweils die erste Abfolge 1 von Zähnen 2 und die zweite Abfolge 3 von Zähnen 4. Die Zähne 2 bzw. 4 der jeweiligen Abfolge 1 bzw. 3 sind in Rollrichtung 5 des zahntragenden Körpers 7 gesehen, jeweils hintereinander angeordnet. In Querrichtung 6, also orthogonal zur Rollrichtung 5, sind die erste Abfolge 1 von Zähnen 2 und die zweite Abfolge 3 von Zähnen 4 in diesem Ausführungsbeispiel ausschließlich nebeneinander angeordnet. Es gibt somit keinen Überlapp in Querrichtung zwischen der ersten Abfolge 1 und der zweiten Abfolge 3. Zwischen den beiden Abfolgen 1 und 3 befindet sich der Zwischensteg 9, welcher damit auch die beiden Abfolgen 1 und 3 voneinander trennt.

Fig. 6 zeigt den Schnitt entlang der Schnittlinie AA, die in Fig. 5 am Zahnrad 7 dargestellt ist, also den Schnitt durch die größeren Zähne 2 der ersten Abfolge 1. Fig. 8 zeigt einen entsprechenden Schnitt entlang der Schnittlinie BB aus Fig. 7 durch die kleineren Zähne 4 der zweiten Abfolge 3. Der Größenunterschied der Zähne 2 und 4 ist beim Vergleich der Schnittdarstellung gemäß Fig. 6 und 8 gut zu sehen. In Fig. 6 ist auch gut zu sehen, dass die Zähne 2 der ersten Abfolge 1 jeweils einen Zahnkern 11 aufweisen, welcher mittels eines Zahnmantels 13 ummantelt ist. Der Zahnmantel 13 bildet jeweils die äußere Oberfläche 12 des jeweiligen Zahnes 2 der ersten Abfolge 1. Im Sinne einer besonders guten Laufruhe kann, wie eingangs bereits dargelegt, der Zahnmantel 13 weicher ausgebildet werden als der Zahnkern 11. Besonders bevorzugt ist vorgesehen, dass die Zähne 4 der zweiten Abfolge 3 ebenfalls härter als die Zahnmäntel 13 der Zähne 2 der ersten Abfolge 1 sind.

Erfindungsgemäße zahntragende Körper, sei es nun in Form von Zahnrädern 7 oder den weiter unten noch gezeigten Zahnstangen 8, können aus verschiedensten Materialien und Materialkombinationen hergestellt sein. Besonders günstig ist die Ausführung in Kunststoff. Kommen verschiedene Materialien zum Einsatz, so können dies verschieden harte Kunststoffe sein. Die Kunststoffzahnräder lassen sich im Spritzguss, gegebenenfalls im Mehrkomponentenspritzguss, besonders günstig herstellen.

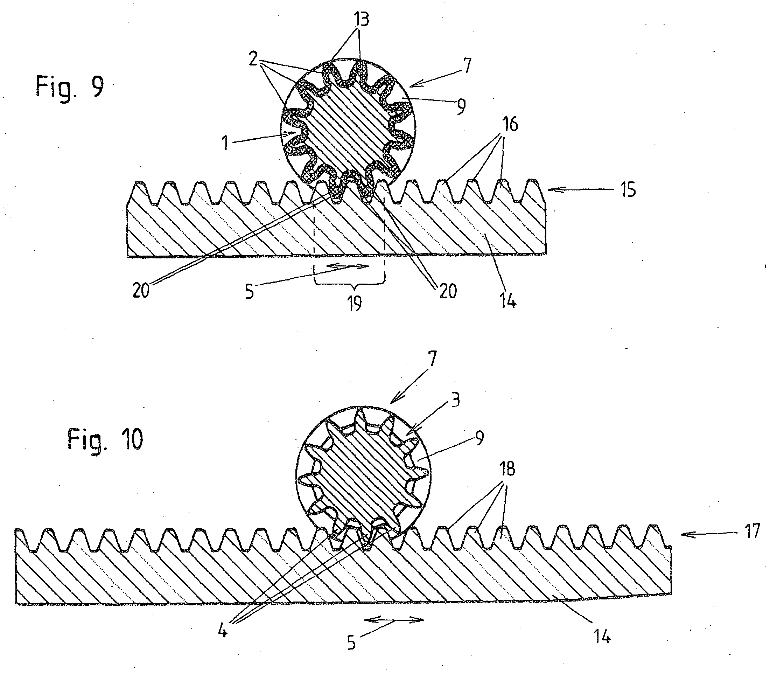

Anhand der Fig. 9 und 10 wird nun das verschiedenartige Zusammenwirken der Zähne 2 und 4 des hier als Zahnrad ausgebildeten erfindungsgemäßen zahntragenden Körpers 7 mit den Zähnen 16 und 18 des hier als Zahnstange ausgebildeten weiteren zahntragenden Körpers 14 gezeigt. Fig. 9 zeigt einen Schnitt durch die erste Abfolge 1 der größeren Zähne 2 entlang der Schnittlinie CC aus Fig. 4. Fig. 10 zeigt den Schnitt entlang der Schnittlinie DD aus Fig. 4, also den Schnitt durch die kleineren Zähne 4 der zweiten Abfolge 3 des erfindungsgemäß ausgebildeten Zahnrades 7. In Fig. 9 ist gut zu sehen, wie die Zähne 2 der ersten Abfolge 1 des erfindungsgemäß ausgebildeten Zahnrades 7 in dem Eingriffsbereich 19 in Eingriff mit den Zähnen 16 der ersten Abfolge 15 der Zahnstange 14 stehen. Im Eingriffsbereich 19 berühren sich die miteinander in Eingriff stehenden Zähne 2 und 16 der beiden ersten Abfolgen 1 und 15 an den Berührungspunkten 20. Fig. 10 zeigt hingegen, wie die Zähne 4 der zweiten Abfolge 3 des erfindungsgemäßen Zahnrades 7 in dem hier gezeigten Normalbetriebszustand vollständig berührungsfrei zwischen den Zähnen 18 der zweiten Abfolge 17 des weiteren zahntragenden Körpers 14 hier in Form der Zahnstange angeordnet sind. Im hier dargestellten Normalbetrieb bei dem keine außergewöhnlichen Kräfte auftreten, kommen die Zähne 4 der zweiten Abfolge 3 des erfindungsgemäßen Zahnrades 7 somit gar nicht in Kontakt mit den Zähnen 18 der zweiten Abfolge 17 der Zahnstange 14. Erst in einem Überlastfall, in dem die weicheren Zahnmäntel 13 der Zähne 2 der ersten Abfolge 1 entsprechend stark deformiert werden, kommen die Zähne 4 der zweiten Abfolge 3 des erfindungsgemäßen Zahnrades mit den Zähnen 18 der zweiten Abfolge 17 der Zahnstange 14 in Eingriff und realisieren dann ihre Sperrfunktion. Zur Zahnstange bzw. dem weiteren zahntragenden Körper 14 sei noch darauf hingewiesen, dass hier die Zähne 16 und 18 der ersten und zweiten Abfolge 15 und 17 äquidistant und gleich groß ausgebildet sind, wie dies Fig. 9 und 10 zu entnehmen ist. Die Zähne 16 und 18 haben aber denselben Versatz zueinander, wie die Zähne 4 und 2 des erfindungsgemäßen Zahnrades 7.

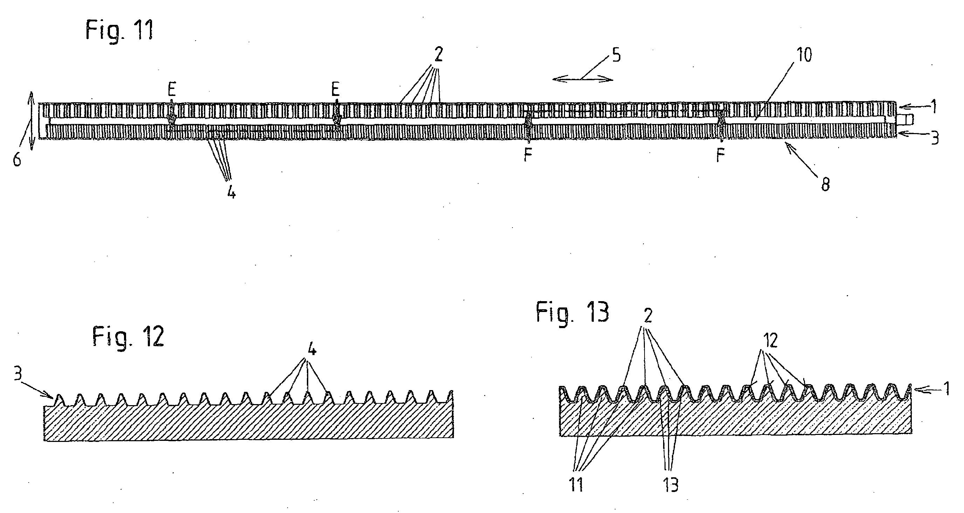

Bei dem bisher geschilderten Ausführungsbeispiel ist der erfindungsgemäße zahntragende Körper als Zahnrad 7 und der damit zusammenwirkende nicht erfindungsgemäß ausgebildete weitere zahntragende Körper als Zahnstange 14 ausgebildet. Dies kann natürlich auch andersherum realisiert werden, wie dies beispielhaft anhand der Fig. 11 bis 13 gezeigt ist. In diesem Ausführungsbeispiel handelt es sich beim erfindungsgemäßen zahntragenden Körper um die Zahnstange 8. Die Zähne 4 der zweiten Abfolge 3 sind hier bei dieser Zahnstange 8 kleiner als die Zähne 2 der ersten Abfolge 1. Das damit korrespondierende Zahnrad 14 ist nicht dargestellt, kann aber wie beim Stand der Technik bekannt ausgeführt sein. Fig. 11 zeigt eine Draufsicht auf die erfindungsgemäß ausgebildete Zahnstange 8. Fig. 12 zeigt den Schnitt EE aus Fig. 11 durch die kleineren Zähne 4 bzw. die zweite Abfolge 3. Fig. 13 zeigt den Schnitt FF durch die erste Abfolge 1, also die größeren Zähne 2, welche wie auch im anderen Ausführungsbeispiel jeweils aus einem Zahnkern 11 und einem weicheren Zahnmantel 13 ausgebildet sind. Durch ein Zusammenwirken mit einem hier nicht dargestellten, beim Stand der Technik an sich bekannten Zahnrad 14, bei dem die Zähne 2 der ersten Abfolge 1 und die Zähne 4 der zweiten Abfolge 3 gleich groß ausgebildet sind, wird derselbe Effekt erzieft, wie bei dem ersten Ausführungsbeispiel, bei dem das Zahnrad 7 erfindungsgemäß ausgebildet ist.

### Legende zu den Hinweisziffern:

- 1: erste Abfolge
- 2: Zähne
- 3: zweite Abfolge
- 4: Zähne
- 5: Rollrichtung
- 6: Querrichtung
- 7: Zahnrad
- 8: Zahnstange
- 9: Zwischensteg
- 10: Zwischennut
- 11: Zahnkern
- 12: äußere Oberfläche
- 13: Zahnmantel
- 14: weiterer zahntragender Körper
- 15: erste Abfolge
- 16: Zahn
- 17: zweite Abfolge
- 18: Zahn
- 19: Eingriffsbereich
- 20: Berührungspunkt
- 21: Auszugseinrichtung
- 22: bewegliches Möbelteil
- 23: Korpusschiene
- 24: Mittelschiene
- 25: Ladenschiene
- 26: Verbindungswelle
- 27: Sperrstange
- 28: Verriegelungskörper

## Patentansprüche

1. Anordnung mit zumindest einem zahntragenden Körper mit einer ersten Abfolge (1) von Zähnen (2) und zumindest einer zweiten Abfolge (3) von Zähnen (4), wobei die Zähne (2) der ersten Abfolge (1), in einer Rollrichtung (5) des zahntragenden Körpers gesehen, hintereinander angeordnet sind und die Zähne (4) der zweiten Abfolge (3), in der Rollrichtung (5) des zahntragenden Körpers gesehen, ebenfalls hintereinander angeordnet sind und die erste Abfolge (1) von Zähnen (2) und die zweite Abfolge (3) von Zähnen (4) in einer Querrichtung (6) orthogonal zur Rollrichtung (5), insbesondere ausschließlich, nebeneinander angeordnet sind, **dadurch gekennzeichnet, dass** die Zähne (2) der ersten Abfolge (1) des zahntragenden Körpers größer sind als die Zähne (4) der zweiten Abfolge (3) des zahntragenden Körpers, wobei die Anordnung zumindest einen weiteren zahntragenden Körper (14) aufweist, welcher ebenfalls eine erste Abfolge (15) von Zähnen (16) und zumindest eine zweite Abfolge (17) von Zähnen (18) aufweist, wobei die Zähne (2) der ersten Abfolge (1) des zahntragenden Körpers mit den Zähnen (16) der ersten Abfolge (17) des weiteren zahntragenden Körpers (14) in einem Eingriffsbereich (19) in Eingriff miteinander stehen und sich die jeweils im Eingriff miteinander stehenden Zähne (2, 16) der beiden ersten Abfolgen (1, 15) an zumindest einem Berührungspunkt (20) berühren, während die Zähne (4) der zweiten Abfolge (3) des zahntragenden Körpers zumindest in einem Betriebszustand vollständig berührungsfrei zwischen den Zähnen (18) der zweiten Abfolge (17) des weiteren zahntragenden Körpers (14) angeordnet sind.

2. Anordnung nach Anspruch 1, **dadurch gekennzeichnet, dass** der zahntragende Körper ein Zahnrad (7) und die Rollrichtung (5) die Umfangsrichtung des Zahnrades (7) ist, in der das Zahnrad (7) über seine Zähne (2, 4) abrollt.

3. Anordnung nach Anspruch 1, **dadurch gekennzeichnet, dass** der zahntragende Körper eine Zahnstange (8) ist und die Rollrichtung (5) die Richtung ist, in der ein Zahnrad auf der Zahnstange (8) abrollt.

4. Anordnung nach einem der Ansprüche 1 bis 3, **dadurch gekennzeichnet, dass**, in Rollrichtung (5) gesehen, die Zähne (2) der ersten Abfolge (1) des zahntragenden Körpers äquidistant zueinander angeordnet sind und/oder dass, in Rollrichtung (5) gesehen, die Zähne (4) der zweiten Abfolge (3) des zahntragenden Körpers äquidistant zueinander angeordnet sind.

5. Anordnung nach einem der Ansprüche 1 bis 4, **dadurch gekennzeichnet, dass**, in Rollrichtung (5) gesehen, die jeweils aufeinander folgenden Zähne (2) der ersten Abfolge (1) des zahntragenden Körpers den gleichen Abstand zueinander haben wie, in Rollrichtung (5) gesehen, die jeweils aufeinander folgenden Zähne (4) der zweiten Abfolge (3) des zahntragenden Körpers.

6. Anordnung nach einem der Ansprüche 1 bis 5, **dadurch gekennzeichnet, dass**, in Querrichtung (6) gesehen, zwischen der ersten Abfolge (1) von Zähnen (2) des zahntragenden Körpers und der zweiten Abfolge (3) von Zähnen (4) des zahntragenden Körpers zumindest ein, die Abfolgen (1, 3) voneinander trennender Zwischensteg (9) oder zumindest eine, die Abfolgen (1, 3) voneinander trennende Zwischennut (10) angeordnet ist.

7. Anordnung nach einem der Ansprüche 1 bis 6, **dadurch gekennzeichnet, dass** die Zähne (2) der ersten Abfolge (1) des zahntragenden Körpers jeweils einen Zahnkern (11) und zumindest einen, diesen Zahnkern (11) ummantelnden und eine äußere Oberfläche (12) des jeweiligen Zahns (2) ausbildenden Zahnmantel (13) aufweisen, wobei der Zahnmantel (13) weicher ausgebildet ist als der Zahnkern (11).

8. Anordnung nach Anspruch 7, **dadurch gekennzeichnet, dass** die Zähne (4), der zweiten Abfolge (3) des zahntragenden Körpers härter ausgebildet sind als die Zahnmäntel (13) der Zähne (2) der ersten Abfolge (1) des zahntragenden Körpers.

9. Anordnung nach einem der Ansprüche 1 bis 8, **dadurch gekennzeichnet, dass** die Zähne (16, 18) der ersten und zweiten Abfolge (15, 17) des weiteren zahntragenden Körpers (14) äquidistant und gleich groß ausgebildet sind.

10. Anordnung nach einem der Ansprüche 1 bis 9, **dadurch gekennzeichnet, dass** die Zähne (2) der ersten Abfolge (1) des zahntragenen Körpers und die Zähne (4) der zweiten Abfolge (3) des zahntragenden Körpers, in Rollrichtung gesehen, versetzt zueinander angeordnet sind.

11. Anordnung nach einem der Ansprüche 1 bis 10, **dadurch gekennzeichnet, dass** die Zähne (4) der zweiten Abfolge (3) des zahntragenden Körpers, in Rollrichtung gesehen, dort angeordnet sind, wo daneben zwischen zwei Zähnen (2) der ersten Abfolge (1) des zahntragenden Körpers eine entsprechende Ausnehmung angeordnet ist.

12. Auszugseinrichtung (21) für ein bewegliches Möbelteil (22), insbesondere Schubladenauszugseinrichtung, mit zumindest einer Anordnung nach einem der Ansprüche 1 bis 11.

## Claims

1. An arrangement having at least one teeth-bearing body with a first sequence (1) of teeth (2) and at least one second sequence (3) of teeth (4), wherein the teeth (2) of the first sequence (1) are, viewed in a rolling direction (5) of the teeth-bearing body, arranged one behind the other and the teeth (4) of the second sequence (3) are, viewed in the rolling direction (5) of the teeth-bearing body, likewise arranged one behind the other and the first sequence (1) of teeth (2) and the second sequence (3) of teeth (4) are, in a transverse direction (6) orthogonal to the rolling direction (5), arranged, in particular exclusively, side by side, **characterized in that** the teeth (2) of the first sequence (1) of the teeth-bearing body are larger than the teeth (4) of the second sequence (3) of the teeth-bearing body, wherein the arrangement has at least one further teeth-bearing body (14) which likewise has a first sequence (15) of teeth (16) and at least one second sequence (17) of teeth (18), wherein the teeth (2) of the first sequence (1) of the teeth-bearing body engage the teeth (16) of the first sequence (17) of the further teeth-bearing body (14) in an engagement region (19) and the teeth (2, 16), in engagement with one another in each case, of the two first sequences (1, 5) contact at at least one contact point (20), while at least in one operating state the teeth (4) of the second sequence (3) of the teeth-bearing body are arranged between the teeth (18) of the second sequence (17) of the further teeth-bearing body (14) in a completely contact-free manner.

2. An arrangement according to claim 1, **characterized in that** the teeth-bearing body is a toothed wheel (7) and the rolling direction (5) is the circumferential direction of the toothed wheel (7), in which the toothed wheel (7) rolls via its teeth (2, 4).

3. An arrangement according to claim 1, **characterized in that** the teeth-bearing body is a rack (8) and the rolling direction (5) is the direction in which a toothed wheel rolls on the rack (8).

4. An arrangement according to any one of claims 1 to 3, **characterized in that** viewed in the rolling direction (5), the teeth (2) of the first sequence (1) of the teeth-bearing body are arranged equidistant from one another and/or **in that** viewed in the rolling direction (5), the teeth (4) of the second sequence (3) of the teeth-bearing body are arranged equidistant from one another.

5. An arrangement according to any one of claims 1 to 4, **characterized in that** viewed in the rolling direction (5), the successive teeth (2) of the first sequence (1) of the teeth-bearing body are at the same distance from one another as, viewed in the rolling direction (5), the successive teeth (4) of the second sequence (3) of the teeth-bearing body.

6. An arrangement according to any one of claims 1 to 5, **characterized in that** viewed in the transverse direction (6), between the first sequence (1) of teeth (2) of the teeth-bearing body and the second sequence (3) of teeth (4) of the teeth-bearing body there is arranged at least one intermediate web (9) separating the sequences (1, 3) from one another or at least one intermediate groove (10) separating the sequences (1, 3) from one another.

7. An arrangement according to any one of claims 1 to 6, **characterized in that** the teeth (2) of the first sequence (1) of the teeth-bearing body have in each case a tooth core (11) and at least one tooth shell (13) which encases this tooth core (11) and forms an outer surface (12) of the respective tooth (2), wherein the tooth shell (13) is softer than the tooth core (11).

8. An arrangement according to claim 7, **characterized in that** the teeth (4) of the second sequence (3) of the teeth-bearing body are harder than the tooth shells (13) of the teeth (2) of the first sequence (1) of the teeth-bearing body.

9. An arrangement according to any one of claims 1 to 8, **characterized in that** the teeth (16, 18) of the first and second sequence (15, 17) of the further teeth-bearing body (14) are equidistant and the same size.

10. An arrangement according to any one of claims 1 to 9, **characterized in that** the teeth (2) of the first sequence (1) of the teeth-bearing body and the teeth (4) of the second sequence (3) of the teeth-bearing body are arranged offset in relation to one another viewed in the rolling direction.

11. An arrangement according to any one of claims 1 to 10, **characterized in that** the teeth (4) of the second sequence (3) of the teeth-bearing body are, viewed in the rolling direction, arranged where a corresponding recess between two teeth (2) of the first sequence (1) of the teeth-bearing body is arranged alongside.

12. A pull-out device (21) for a movable furniture part (22), in particular drawer pull-out device, having at least one arrangement according to any one of claims 1 to 11.

## Revendications

1. Dispositif comprenant au moins un corps équipé de dents ayant au moins une première succession (1) de dents (2) et au moins une seconde succession (3) de dents (4), les dents (2) de la première succession de dents (1) étant disposées les unes derrière les autres dans une direction de roulement (5) du corps équipé de dents, et les dents (4) de la seconde succession de dents (3) étant également situées les unes derrière les autres dans la direction de roulement (5) du corps équipé de dents, et la première succession (1) de dents (2) et la seconde succession (3) de dents (4) étant positionnées dans une direction transversale (6) perpendiculairement à la direction de roulement (5), en particulier exclusivement côte à côte,
**caractérisé en ce que**
les dents (2) de la première succession de dents (1) du corps équipé de dents sont plus grandes que les dents (4) de la seconde succession de dents (3) du corps équipé de dents, le dispositif comprenant au moins un autre corps équipé de dents (14), qui comprend également une première succession (15) de dents (16) et au moins une seconde succession (17) des dents (18), les dents (2) de la première succession de dents (1) du corps équipé de dents venant en prise avec les dents (16) de la première succession de dents (17) de l'autre corps (14) équipé de dents dans une zone de mise en prise (19), et les dents (2, 16) respectivement mises en prise des deux premières successions de dents (1, 15) venant en contact au niveau d'au moins un point de contact (20) tandis que les dents (4) de la seconde succession de dents (3) du corps équipé de dents sont positionnées, au moins dans un état de fonctionnement en étant exemptes de contact avec les dents (18) de la seconde succession de dents (17) de l'autre corps équipé de dents (14).

2. Dispositif conforme à la revendication 1,
**caractérisé en ce que**
le corps équipé de dents est une roue dentée (7) et la direction de roulement (5) est la direction périphérique de la roue dentée (7) dans laquelle la roue dentée (7) roule par ses dents (2, 4).

3. Dispositif conforme à la revendication 1,
**caractérisé en ce que**
le corps équipé de dents est une crémaillère (8) et la direction de roulement (5) est la direction dans laquelle une roue dentée roule sur la crémaillère (8).

4. Dispositif conforme à l'une des revendications 1 à 3,
**caractérisé en ce que**
dans la direction de roulement (5), les dents (2) de la première succession de dents (1) du corps équipé de dents sont équidistantes les unes des autres et/ou, dans la direction de roulement (5), les dents (4) de la seconde succession de dents (3) du corps équipé de dents sont équidistantes les unes des autres.

5. Dispositif conforme à l'une des revendications 1 à 4,
**caractérisé en ce que**
dans la direction de roulement (5), les dents (2) respectivement successives de la première succession de dents (1) du corps équipé de dents sont à la même distance les unes des autres que, dans la direction de roulement (5), les dents (4) respectivement successives de la seconde succession de dents (3) du corps équipé de dents.

6. Dispositif conforme à l'une des revendications 1 à 5,
**caractérisé en ce que**
dans la direction transversale (6), entre la première succession (1) de dents (2) du corps équipé de dents et la seconde succession (3) de dents (4) du corps équipé de dents est positionnée au moins une nervure intermédiaire (9) séparant les successions de dents (1, 3) l'une de l'autre ou au moins une rainure intermédiaire (10) séparant les successions de dents (1, 3) l'une de l'autre.

7. Dispositif conforme à l'une des revendications 1 à 6,
**caractérisé en ce que**
les dents (2) de la première succession de dents (1) du corps équipé de dents comportent respectivement un noyau de dent (11) et au moins une enveloppe de dent (13) enveloppant le noyau de dent (11) et formant la surface externe (12) de la dent (2) respective, l'enveloppe de dent (13) étant plus molle que le noyau de dent (11).

8. Dispositif conforme à la revendication 7,
**caractérisé en ce que**
les dents (4) de la seconde succession de dents (3) du corps équipé de dents sont plus dures que l'enveloppe de dent (13) des dents (2) de la première succession de dents (1) du corps équipé de dents.

9. Dispositif conforme à l'une des revendications 1 à 8,
**caractérisé en ce que**
les dents (16, 18) de la première et de la seconde successions de dents (15, 17) de l'autre corps équipé de dents (14) sont équidistantes et ont la même dimension.

10. Dispositif conforme à l'une des revendications 1 à 9,
**caractérisé en ce que**
les dents (2) de la première succession de dents (1) du corps équipé de dents et les dents (4) de la seconde succession de dents (3) du corps équipé de dents sont décalées les unes par rapport aux autres dans la direction de roulement.

11. Dispositif conforme à l'une des revendications 1 à 10,
**caractérisé en ce que**
les dents (4) de la seconde succession de dents (3) du corps équipé de dents sont positionnées, dans la direction de roulement, de sorte que, entre deux dents (2) de la première succession de dents (1) du corps équipé de dents, soit situé un évidement correspondant.

12. Dispositif d'éjection (21) pour un meuble mobile (22), en particulier dispositif d'éjection d'un tiroir équipé d'au moins un dispositif conforme à l'une des revendications 1 à 11.
